# EUROPEAN PATENT APPLICATION

(11) **EP 4 790 814 A1**
(43) Date of publication of application: **12.08.2026**
(21) Application number: 25156226.0
(22) Date of filing: 06.02.2025
(51) Int. Cl.: H01M 50/367, H01M 10/658, H01M 50/24, H01M 50/271, H01M 50/276, H01M 50/103, H01M 50/296, H01M 50/55

(54) **BATTERY PACK VENTING ARRANGEMENT**

(71) Applicant: Ford Global Technologies, LLC, Dearborn, MI 48126 (US)
(72) Inventor: COX, David, London, SE16 5XJ (GB); PETRIDIS, Themi, Bishop's Stortford, CM23 3NG (GB); STOTHARD, Christopher, Billericay, CM11 2DR (GB); ETHERIDGE, Paul, Crowborough, TN6 2EA (GB)
(74) Representative: HG Law International LLP

(57) **Abstract**

The present disclosure provides a cover element for a battery pack. The cover element is generally planar and formed from a silicate mineral. The cover element is configured to be sealed to a periphery of the battery pack and attached to a top surface of arrays which form the battery pack. The cover element includes cover apertures configured to be aligned with vent apertures in the top surface of the arrays and to form a seal around the vent apertures, providing a fluid pathway from the cover apertures. The cover element may be formed of mica and include terminal apertures aligned with array terminals. A battery pack (250) incorporating the cover element and a vehicle containing such a battery pack are also disclosed.

## Description

### FIELD OF INVENTION

The present disclosure relates to battery packs, and more particularly to a cover element for a battery pack, a battery pack, and a vehicle comprising a battery pack designed for efficient venting of gases during cell venting events.

### BACKGROUND

Battery packs are widely used as power sources in various applications, including electric vehicles, portable electronic devices, and energy storage systems. These battery packs typically consist of multiple battery cells arranged in arrays and connected to form a high-capacity power unit. As the demand for higher energy density and longer-lasting batteries increases, manufacturers continue to develop more advanced battery technologies.

One aspect of battery pack design is managing potential thermal events. In some cases, battery cells may experience temperature increases, leading to a phenomenon known as thermal runaway.

Current battery pack designs often incorporate various safety features to mitigate the risks associated with thermal runaway. These may include thermal management systems, cell-level protection mechanisms, and venting arrangements. However, it is challenging to effectively contain and direct hot gases released during cell venting events.

Additionally, the complex internal structure of battery packs, including busbars, terminals, and other electrical connections, presents obstacles to efficient gas venting. These components can obstruct the flow of vented gases.

Furthermore, it is desirable to protect the battery pack's electrical components from exposure to the hot, potentially conductive gases and particulates released during cell venting.

### SUMMARY OF INVENTION

This Summary is provided to introduce a selection of concepts in a simplified form that are further described below in the Detailed Description.

In a first aspect, a cover element for a battery pack is provided. The cover element is generally planar and formed from a silicate mineral, configured to be sealed to a periphery of the battery pack and to be attached to a top surface of arrays which form the battery pack. The cover element includes cover apertures configured to be aligned with vent apertures in the top surface of the arrays which form the battery pack and to form a seal around the vent apertures, so as to provide a fluid pathway from the cover apertures.

This cover element design provides effective thermal insulation and directs hot exhaust gases from cell venting events away from battery components, enhancing battery performance.

The silicate mineral from which the cover element is formed may be mica.

Using mica as the material for the cover element offers excellent heat resistance and electrical insulation properties, further enhancing the protective capabilities of the cover element.

The cover apertures of the cover element may be further configured to be sealed around the vent apertures in the top surface of the arrays.

Sealing the cover apertures around the vent apertures ensures that vented gases are effectively channeled through the intended pathway, potentially preventing gas leakage across other battery components.

The cover apertures may each comprise a burst region.

Incorporating burst regions in the cover apertures allows for controlled release of pressure during venting events, providing an additional safety mechanism.

The burst region may comprise a frangible portion.

A frangible portion in the burst region ensures a predictable and reliable rupture point for pressure release, enhancing the overall safety of the battery pack.

The frangible portion may be configured to rupture at a pre-determined pressure level.

Configuring the frangible portion to rupture at a specific pressure level allows for precise control over when the additional venting occurs, optimizing the balance between containment and pressure relief.

The cover element may further comprise terminal apertures which are configured to be aligned with terminals of the arrays which form the battery pack.

Including terminal apertures in the cover element allows for proper electrical connections while maintaining the protective barrier provided by the cover element.

The terminal apertures may be further configured to form a seal around the terminals of the arrays which form the battery pack.

Sealing around the terminals helps prevent hot gases from escaping through these points, maintaining the integrity of the venting system.

The terminal apertures may each comprise a further burst region.

Incorporating burst regions in the terminal apertures provides an additional safety feature, allowing for pressure release near the terminals if necessary.

Each further burst region may be configured to rupture at a pre-determined pressure level.

Configuring the burst regions in the terminal apertures to rupture at specific pressure levels allows for tailored protection of the terminal areas.

Each cover aperture may be configured to be aligned with a vent aperture of a single array.

This one-to-one alignment ensures efficient and directed venting for each individual array within the battery pack.

The cover element may include at least two cover apertures which are configured to be aligned with at least two vent apertures of a single array.

Providing multiple vent paths for a single array enhances the venting capacity of larger arrays.

In a second aspect, a battery pack comprising the cover element of the first aspect is provided.

Incorporating the cover element into a battery pack design provides comprehensive thermal management for the entire battery system.

The battery pack may further comprise a plurality of arrays which form the battery pack, each array having at least one vent aperture which is aligned with the cover apertures of the cover element; a lid having a silicate layer on the inner surface; and at least one vent aperture. The battery pack may be configured such that a fluid flow path is provided between the cover element and the lid and toward the at least one vent aperture.

This configuration creates a controlled venting system that directs hot gases away from components and out of the battery pack, enhancing safety during thermal events.

In a third aspect, a vehicle comprising the battery pack of the second aspect is provided.

Integrating this advanced battery pack design into a vehicle enhances the overall performance, e.g., safety and reliability, of electric vehicles, potentially improving consumer confidence and adoption of electric vehicle technology.

### BRIEF DESCRIPTION OF FIGURES

Embodiments of the invention will be described, by way of example, with reference to the following drawings, in which:
FIG. 1 illustrates a view of a battery pack, according to aspects of the present disclosure.
FIG. 2 illustrates a view of a battery pack with a cover element, according to aspects of the present disclosure.
FIG. 3 illustrates a section view of a battery pack, according to aspects of the present disclosure.
FIG. 4 illustrates a top view of a battery pack, according to aspects of the present disclosure.
FIG. 5 illustrates a side view outline of a vehicle with a battery pack, according to aspects of the present disclosure.

Common reference numerals are used throughout the figures to indicate similar features.

### DETAILED DESCRIPTION

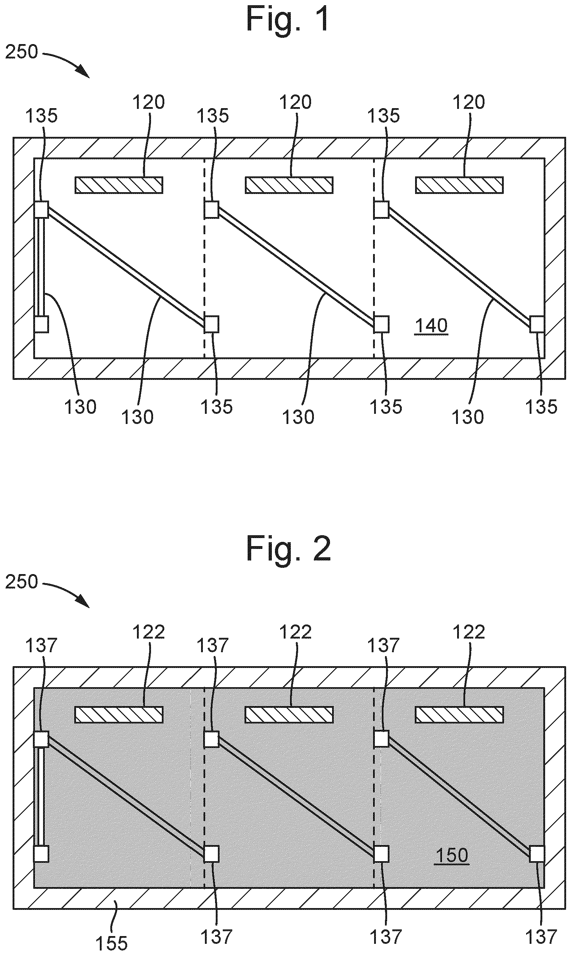

FIG. 1 illustrates a battery pack 250. The battery pack 250 comprises a plurality of arrays. The battery pack 250 includes several components arranged on a top surface of arrays 140.

The battery pack 250 includes three vent apertures 120 positioned along the upper portion of the structure. The vent apertures 120 are evenly spaced across the width of the battery pack 250. The vent apertures 120 are arranged to allow gas flow from within the arrays out of the battery pack 250.

The battery pack 250 further includes busbars 130 arranged across the battery pack 250. The busbars 130 connect the constituent arrays together. In the example shown in FIG. 1, three arrays are within the battery pack 250.

Terminals 135 are located at the ends of the busbars 130. The terminals 135 provide electrical connections for the battery pack 250.

The top surface of arrays 140 forms the top of the battery pack 250, beneath which the other components are arranged. The top surface of arrays 140 provides a structural support for the components of the battery pack 250.

In some examples, a vehicle comprises the battery pack 250. The battery pack 250 may be used to provide electrical power to the vehicle.

FIG. 2 illustrates a battery pack 250 comprising a cover element 150. The cover element 150 is generally planar and is configured to be attached to the top surface of arrays 140 which form the battery pack 250. The cover element 150 is formed from a silicate mineral.

The cover element 150 includes a plurality of cover apertures 122. Each cover aperture 122 is configured to be aligned with a vent aperture of a single array. In some examples, the cover element 150 includes at least two cover apertures 122 configured to be aligned with at least two vent apertures of a single array. The cover apertures 122 are located toward the outer edge of the array.

The cover element 150 is configured to form a seal around the vent apertures. In some examples, the cover element 150 is sealed to the array around the cover apertures 122 using thermal sealant, glue, or fixings. The cover element 150 provides a fluid pathway from the cover apertures 122.

The cover element 150 also comprises a plurality of terminal apertures 137. The terminal apertures 137 are configured to be aligned with terminals of the arrays. In some examples, the terminal apertures 137 are positioned around the low voltage and high voltage connectors of the arrays.

The cover element 150 is configured to be sealed to a periphery of battery pack 155. In some examples, the cover element 150 is sealed to the battery tray walls.

The arrangement of the cover apertures 122 and terminal apertures 137 on the cover element 150 allows for efficient venting and electrical connections while maintaining a sealed environment within the battery pack 250.

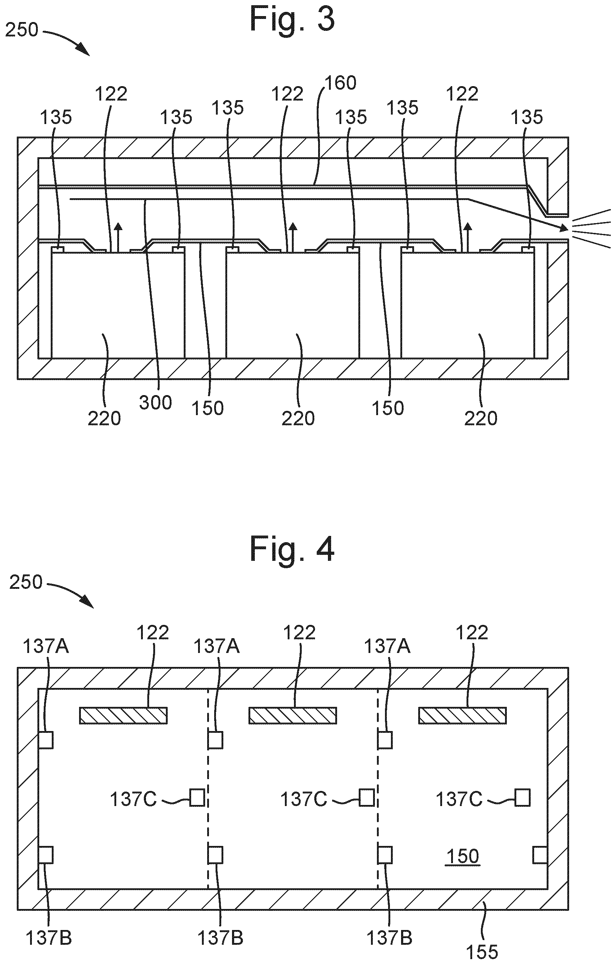

FIG. 3 illustrates a cross-sectional view of a battery pack 250. The battery pack 250 includes a plurality of arrays 220, a cover element 150, and an upper cover 160.

The arrays 220 are positioned side by side within the battery pack 250. Each array 220 is associated with a pair of terminals 135. The terminals 135 are located at the top of each array 220 and extend upward from the array 220.

The cover element 150 spans the width of the battery pack 250 and is sealed to the top surfaces of the arrays 220. The cover element 150 contains multiple cover apertures 122, represented by openings in the layer. The cover apertures 122 are aligned with spaces between the arrays 220, providing pathways through the cover element 150.

The upper cover 160 is positioned above the cover element 150. The upper cover 160 has a silicate layer on the inner surface. In some examples, the silicate layer is a mica sheet applied to the underside of the upper cover 160. The mica sheet may be a 1mm thick rigid mica.

A flow path 300 is provided between the cover element 150 and the upper cover 160. The flow path 300 is indicated by arrows pointing upward from the arrays 220, through the cover apertures 122, and into the space between the cover element 150 and the upper cover 160. The battery pack 250 is configured such that the flow path 300 directs fluid or gas movement toward at least one vent aperture in the battery pack 250.

The arrangement of the arrays 220, cover element 150, and upper cover 160 facilitates the venting of gases from the arrays 220 through the cover apertures 122 and along the flow path 300. This configuration provides a controlled route for gas or fluid movement within the battery pack 250.

FIG. 4 illustrates a top view of a battery pack 250. The battery pack 250 comprises a cover element 150 with the periphery of battery pack 155 defining its outer boundary. The cover element 150 is sealed to the periphery of battery pack 155.

The cover element 150 includes three cover apertures 122 positioned along the upper portion of the cover element 150. The cover apertures 122 are spaced at regular intervals and are represented by rectangular openings. The cover element 150 is configured to be sealed around the cover apertures 122, which are aligned with vent apertures in the top surface of arrays forming the battery pack 250.

The cover element 150 also includes three sets of terminal apertures. Each set comprises a first terminal aperture 137A, a second terminal aperture 137B, and a third terminal aperture 137C. These terminal apertures are distributed across the cover element 150 and form a triangular arrangement within each set. The cover element 150 may be sealed around the terminal apertures 137A, 137B, and 137C, which are aligned with terminals in the top surface of the arrays.

The arrangement of the cover apertures 122 and the sets of terminal apertures (137A, 137B, 137C) creates three distinct sections across the cover element 150. Each section contains a cover aperture 122 and a set of terminal apertures (137A, 137B, 137C).

The configuration of the cover element 150 with the cover apertures 122 and terminal apertures 137A, 137B, and 137C allows for efficient venting and electrical connections while maintaining a sealed environment within the battery pack 250. The sealing of the cover element 150 around these apertures helps to direct the flow path of gases or fluids within the battery pack 250, guiding them towards the space between the cover element 150 and the upper cover.

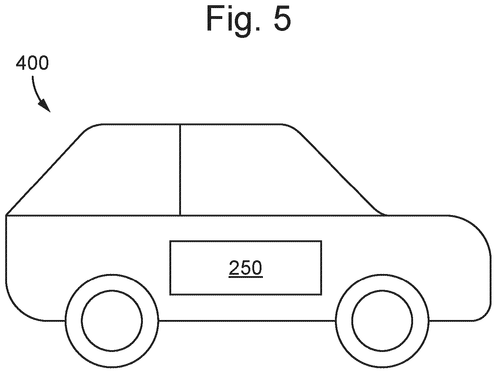

FIG. 5 illustrates a side view outline of a vehicle 400. The vehicle 400 includes a battery pack 250 positioned in the middle of the vehicle's body.

The battery pack 250 is integrated into the vehicle 400 in a manner that allows for efficient use of space within the vehicle 400. The positioning of the battery pack 250 in the middle of the vehicle 400 may provide a balanced weight distribution, which can contribute to enhanced vehicle handling and stability.

The battery pack 250 incorporated into the vehicle 400 includes the components and features previously described, such as the cover element 150, the arrays 220, and the upper cover 160. The cover element 150, with its cover apertures 122 and terminal apertures 137A, 137B, and 137C, is sealed to the periphery of battery pack 155 within the vehicle 400.

The integration of the battery pack 250 into the vehicle 400 maintains the flow path 300 between the cover element 150 and the upper cover 160. This configuration allows for the controlled venting of gases from the arrays 220 through the cover apertures 122 and along the flow path 300 within the confines of the vehicle 400.

The placement of the battery pack 250 within the vehicle 400 takes into account the need for accessibility for maintenance and potential replacement. The design of the battery pack 250, including the arrangement of the cover element 150 and the upper cover 160, facilitates servicing of the battery pack 250 while installed in the vehicle 400.

In the vehicle 400, the battery pack 250 serves as the primary power source for the vehicle's electric propulsion system. The integration of the battery pack 250 into the vehicle 400 includes appropriate electrical connections to the vehicle's power systems, utilizing the terminals 135 of the arrays 220.

The incorporation of the battery pack 250 into the vehicle 400 considers the controlled venting mechanism provided by the cover apertures 122 and the flow path 300. This design helps manage potential gas release from the battery pack 250 within the vehicle 400 environment.

The cover element 150 is formed from a silicate mineral. In some examples, the silicate mineral is mica. Mica possesses properties that make it suitable for use in the battery pack 250, including heat resistance, electrical insulation, and flexibility.

The cover element 150 includes cover apertures that comprise burst regions. These burst regions are designed to provide controlled venting in case of overpressure within the battery pack 250. In some examples, each burst region comprises a frangible portion. The frangible portion is configured to rupture at a pre-determined pressure level, allowing for the release of gases or fluids from the arrays.

In some examples, the cover apertures include a valve with a suitable opening pressure. This valve configuration allows for controlled release of pressure when a specific threshold is reached. Alternatively, the cover apertures may include a weakened part of the cover element 150, which is designed to give way under specific pressure conditions. The or each weakened part of the cover element 150 may be termed a burst region, and a burst region may be formed of material which is thinner than the other parts of the cover element 150, has a thinner cross-section, may be a slot or slots, and/or may be areas specifically selected to vent through based on pressure.

The terminal apertures in the cover element 150 incorporate safety-enhancing features. Each terminal aperture comprises a further burst region. These further burst regions are designed to provide an additional pathway for pressure release if needed. The further burst regions in the terminal apertures are also configured to rupture at a pre-determined pressure level.

The incorporation of burst regions in both the cover apertures and terminal apertures provides multiple pathways for pressure release, enhancing the overall performance of the battery pack 250. These features are designed to work in conjunction with the flow path between the cover element 150 and the upper cover, directing any released gases or fluids towards the designated venting areas of the battery pack 250.

The material properties of the cover element 150, e.g., combined with the above features, contribute to the overall performance of the battery pack 250. These features are designed to manage overpressure events, helping to maintain the integrity of the battery pack 250 and, by extension, the safety of the vehicle in which the battery pack 250 is installed.

The battery pack includes a venting mechanism designed to manage gas flow and thermal events. The cover element plays a crucial role in this mechanism, working in conjunction with its apertures to control and direct gas flow within the battery pack.

The cover element includes cover apertures and terminal apertures. The cover apertures are configured to align with vent apertures in the top surface of arrays, forming a seal around these vent apertures. This alignment and sealing create a controlled pathway for gas to escape from the arrays during a venting event.

The terminal apertures in the cover element are designed to align with the terminals of the arrays. In some examples, the terminal apertures include the first terminal aperture, the second terminal aperture, and the third terminal aperture. These terminal apertures may also serve as additional venting points if necessary.

The sealing of the cover element to the periphery of battery pack is a critical aspect of the venting mechanism. This seal ensures that gas released from the arrays is directed through the intended pathways, preventing uncontrolled gas release within the battery pack.

The flow path between the cover element and the upper cover serves as a channel for gas movement. When gas is released from an array through a cover aperture, the flow path guides the gas towards designated venting areas of the battery pack. This controlled gas movement helps manage thermal events by directing hot gases away from sensitive components within the battery pack.

The venting mechanism also contributes to thermal management within the battery pack. By providing a controlled path for hot gases to escape, the mechanism helps to thermally manage the arrays and the battery pack as a whole. This thermal management aspect is helpful for enhancing the performance of the battery pack, especially during high-stress events or thermal runaway scenarios.

In some examples, the cover element is formed from a heat-resistant material, which further enhances the thermal management capabilities of the venting mechanism. This material choice helps protect the cover element and maintain its integrity during high-temperature venting events.

The venting mechanism, with its carefully designed apertures and flow paths, works to enhance the overall safety of the battery pack. By controlling gas release and managing thermal events, the mechanism helps protect the internal components of the battery pack and, by extension, the vehicle in which the battery pack is installed. In some examples, the venting mechanism may manage, e.g., direct, any particles released in the gas, along with any debris , away from other cells, which may reduce the likelihood of them entering thermal runaway. In some cases, the particles and/or debris may be particles and/or debris from the cell cases. Such particles may also build up underneath or around busbars and/or busbar terminals which may give rise a path for a short circuit.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A cover element for a battery pack, the cover element being generally planar and formed from a silicate mineral, the cover element configured to be sealed to a periphery of the battery pack and to be attached to a top surface of arrays which form the battery pack, and the cover element including cover apertures configured to be aligned with vent apertures in the top surface of the arrays which form the battery pack and to form a seal around the vent apertures, so as to provide a fluid pathway from the cover apertures.

2. The cover element of claim 1, wherein the silicate mineral from which the cover element is formed is mica.

3. The cover element of claim 1 or claim 2, wherein the cover apertures of the cover element are further configured to be sealed around the vent apertures in the top surface of the arrays.

4. The cover element of any preceding claim wherein the cover apertures each comprise a burst region.

5. The cover element of claim 4, wherein each burst region comprises a frangible portion.

6. The cover element of claim 5, wherein the frangible portion is configured to rupture at a pre-determined pressure level.

7. The cover element of any preceding claims further comprising terminal apertures which are configured to be aligned with terminals of the arrays which form the battery pack.

8. The cover element of claim 7, wherein the terminal apertures are further configured to form a seal around the terminals of the arrays which form the battery pack.

9. The cover element of claim 8, wherein the terminal apertures each comprise a further burst region.

10. The cover element of claim 9, wherein each further burst region is configured to rupture at a pre-determined pressure level.

11. The cover element of any preceding claim, wherein each cover aperture is configured to be aligned with a vent aperture of a single array.

12. The cover element of any preceding claim, wherein the cover element includes at least two cover apertures which are configured to be aligned with at least two vent apertures of a single array.

13. A battery pack comprising the cover element of any one of claims 1-12.

14. The battery pack of claim 13 further comprising:
a plurality of arrays which form the battery pack, each array having at least one vent aperture which is aligned with the cover apertures of the cover element;
a lid having a silicate layer on the inner surface; and
at least one vent aperture, wherein:
the battery pack is configured such that a fluid flow path is provided between the cover element and the lid and toward the at least one vent aperture.

15. A vehicle comprising the battery pack of claim 13 or 14.
